# EUROPÄISCHE PATENTSCHRIFT

(11) **EP 2 304 214 B1**
(45) Veröffentlichungstag und Bekanntmachung des Hinweises auf die Patenterteilung: **28.11.2012**
(21) Anmeldenummer: 09780516.2
(22) Anmeldetag: 13.07.2009
(51) Int. Cl.: F02M 35/116, F02D 9/02, F02M 25/07, F02B 29/08, F02D 9/10, F02M 35/10

(54) **FRISCHLUFTANLAGE**
FRESH AIR SYSTEM
SYSTÈME D'ALIMENTATION EN AIR FRAIS

(30) Priorität: 18.07.2008 DE 102008033885; 10.09.2008 DE 102008046596
(43) Veröffentlichungstag der Anmeldung: 06.04.2011
(73) Patentinhaber: Mahle International GmbH, 70376 Stuttgart (DE)
(72) Erfinder: ELSÄSSER, Alfred, 75210 Keltern (DE); GOMMEL, Achim, 75397 Simmozheim (DE); WARTH, Marco, 73614 Schorndorf (DE)
(74) Vertreter: BRP Renaud & Partner
(86) Internationale Anmeldenummer: PCT/EP2009/058927
(87) Internationale Veröffentlichungsnummer: WO 2010/007024

(56) Entgegenhaltungen:
- EP-A- 0 223 378
- EP-A- 1 270 918
- EP-A- 1 705 351
- WO-A-89/03473
- WO-A-2008/017605
- DE-A1- 4 014 291
- DE-A1- 10 001 638
- DE-A1- 19 523 107
- GB-A- 2 173 857

## Beschreibung

Die vorliegende Erfindung betrifft eine zweiflutige Frischluftanlage für eine Brennkraftmaschine, insbesondere eines Kraftfahrzeugs, mit den Merkmalen des Oberbegriffs des Anspruchs 1.

Eine Frischluftanlage dient zur Versorgung einer Brennkraftmaschine bzw. deren Zylinder mit Frischluft. Zur Reduzierung des Kraftstoffverbrauchs sowie der Schadstoffemissionen ist es üblich, Verbrennungsabgase zur Frischluftanlage zurückzuführen, die über einen entsprechenden Abgasrückführeinlass in die Frischluftanlage eingeleitet werden. Bei bestimmten Betriebszuständen der Brennkraftmaschine ist es aufgrund der herrschenden Druckverhältnisse schwierig, die gewünschte Abgasmenge in die Frischluftanlage rückzuführen. Zur Vermeidung z.B. einer teuren Pumpe in einer Abgasrückführleitung ist es grundsätzlich möglich, in der Frischluftanlage stromauf des Abgasrückführeinlasses ein Ventilglied anzuordnen, mit dessen Hilfe ein durchströmbarer Querschnitt der Frischluftanlage gesteuert werden kann. Durch kurzzeitiges Reduzieren des durchströmbaren Querschnitts kann im Bereich des Abgasrückführeinlasses während der Befüllungsphase eines Ladungswechselvorgangs der Druck abgesenkt werden, was die Einleitung des rückgeführten Abgases erleichtert. Insbesondere kann durch eine gezielte Betätigung des Ventilglieds eine gewünschte Abgasrückführrate eingestellt werden.

Aus der EP 0 223 378 A ist eine gattungsgemäße zweiflutige Frischluftanlage bekannt. Weitere Frischluftanalegen sind aus der GB 2 173 857 A und aus der WO 2008/017605 A bekannt.

Die vorliegende Erfindung beschäftigt sich mit dem Problem, für eine Frischluftanlage der eingangs genannten Art eine verbesserte Ausführungsform anzugeben, die sich insbesondere dadurch auszeichnet, dass sie mit vergleichsweise einfachen Mitteln eine vergleichsweise zuverlässige und gut regelbare Abgasrückführung bis zu höchsten AGR-Raten ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Frischluftanlage zweiflutig auszugestalten und jeder Flut einen eigenen Abgasrückführeinlass und ein eigenes Ventilglied zuzuordnen. Die erste Flut ist dabei den ersten Zylindern der Brennkraftmaschine zugeordnet und versorgt diese mit Luft, während die zweite Flut zur Luftversorgung den zweiten Zylindern der Brennkraftmaschine zugeordnet ist. Die Erfindung nutzt hierbei die Erkenntnis, dass bei Brennkraftmaschinen, die eine größere Anzahl von Zylindern aufweisen,
Überschneidungen bei den Beladungsphasen der einzelnen Zylinder auftreten können. Ein einzelnes Ventilglied zum Steuern des Drucks an einem einzelnen Abgasrückführeinlass muss dann mit einer vergleichsweise hohen Frequenz schalten, um für die einzelnen Beladungsphasen die gewünschte Abgasrückführrate einstellen zu können. Ferner kann es aufgrund der sich überschneidenden Beladungsphasen zu unerwünschten Wechselwirkungen kommen, was die Einstellung einer exakten Abgasrückführrate bei den einzelnen Zylindern erschwert. Durch die Verwendung einer zweiflutigen Frischluftanlage ist es nun möglich, die Zylinder der Brennkraftmaschine so zu gruppieren, dass innerhalb der jeweiligen Zylindergruppe die Ladungswechselvorgänge bei den einzelnen Zylindern besser voneinander getrennt sind, so dass insbesondere die Beladungsphasen der einzelnen Zylinder innerhalb der jeweiligen Zylindergruppe überschneidungsfrei aufeinanderfolgen können. Beispielsweise können bei einem Reihen-Sechs-Zylinder-Motor die ersten drei Zylinder einer ersten Zylindergruppe und die zweiten drei Zylinder einer zweiten Zylindergruppe zugeordnet werden. Bei einem V-Sechs-Zylinder-Motor können die drei Zylinder der ersten Zylinderbank die erste Zylindergruppe bilden, während die drei Zylinder der zweiten Zylinderbank die zweite Zylindergruppe bilden. Durch die Aufteilung in Zylindergruppen, die über separate Fluten der Frischluftanlage mit Frischluft versorgt werden, können die einzelnen Ventilglieder die Abgasrückführung zu den Zylindern besser steuern, da die aufeinanderfolgenden Befüllungsphasen innerhalb der jeweiligen Zylindergruppe vergleichsweise deutlich voneinander getrennt sind. In der Folge steht mehr Zeit zur Realisierung eines gewünschten Drucks am jeweiligen Abgasrückführeinlass zur Verfügung, wodurch die Einstellung einer gewünschten Abgasrückführrate genauer möglich ist. Ferner können die Ventilglieder deutlich langsamer arbeiten, was ihre Synchronisation verbessert und die Zuverlässigkeit und Güte der eingestellten Abgasrückführraten erhöht. Der Mehraufwand zur Realisierung der beiden getrennten Fluten mit separaten Abgasrückführeinlässen und separaten Ventilgliedern ist dabei vergleichsweise gering. Insbesondere kann dieser Mehraufwand durch den einfacheren Aufbau der Ventilglieder bzw. einer entsprechenden Betätigungseinrichtung im Wesentlichen kompensiert werden.

Besonders vorteilhaft ist eine Ausführungsform, bei welcher eine Ventileinrichtung vorgesehen ist, welche die beiden Ventilglieder und ein gemeinsames Antriebsglied für die beiden Ventilglieder umfasst. Dabei können die beiden Ventilglieder phasenversetzt mit dem Antriebsglied gekoppelt sein, und zwar insbesondere derart, dass das eine Ventilglied den durchströmbaren Querschnitt der einen Flut minimiert oder sperrt, während gleichzeitig das andere Ventilglied den durchströmbaren Querschnitt der anderen Flut maximiert oder öffnet, und umgekehrt. Durch diesen Aufbau lässt sich die Betätigung der beiden Ventilglieder vergleichsweise preiswert realisieren, da nur ein einziges, gemeinsames Antriebsglied erforderlich ist.

Bei einer anderen vorteilhaften Ausführungsform kann ein Funktionsmodul vorgesehen sein, das einen zweiflutigen Abschnitt eines Frischluft zur Brennkraftmaschine führenden Frischlufttrakts bildet, das die beiden Ventilglieder enthält, das die beiden Abgasrückführeinlässe aufweist und das als separate Einheit in den Frischlufttrakt eingebaut ist. Ein derartiges Funktionsmodul bildet somit eine unabhängig von den übrigen Komponenten der Frischluftanlage vormontierbare Baugruppe, die dann als Einheit in den Frischlufttrakt eingebaut werden kann. Dies vereinfacht die Montage und reduziert letztlich die Herstellungskosten der Frischluftanlage.

Erfindungsgemäß ist in einer die beiden Fluten voneinander trennenden Trennwand zumindest eine mit einem Steuerglied steuerbare Verbindungsöffnung ausgebildet. In einer Offenstellung des Steuerglieds verbindet diese Verbindungsöffnung die beiden Fluten kommunizierend miteinander, während die beiden Fluten in einer Schließstellung des Steuerglieds voneinander getrennt sind. Durch Öffnen der Verbindungsöffnung, also bei in die Offenstellung verstelltem Steuerglied wird die fluidische Trennung der beiden Fluten aufgehoben, um sie miteinander fluidisch zu koppeln. Mit Hilfe dieser Bauweise kann für den Fall, dass bei einem Defekt eines der Ventilglieder oder der Ventileinrichtung die eine Flut blockiert ist, ein Notlaufbetrieb für die Brennkraftmaschine realisiert werden. In diesem Notlaufbetrieb funktioniert zwar die Abgasrückführung nicht mehr in der gewünschten Weise, jedoch kann die Brennkraftmaschine grundsätzlich weiter betrieben werden. Insbesondere kann das Fahrzeug aus eigener Kraft zur nächsten Werkstatt fahren. Mit Hilfe der steuerbaren Verbindungsöffnung kann somit innerhalb der zweiflutigen Frischluftanlage ein interner Bypass realisiert werden, um einen Notlaufbetrieb für die Brennkraftmaschine zu ermöglichen. Dabei lässt sich dieser interne Bypass vergleichsweise preiswert realisieren, und zwar insbesondere ohne großen zusätzlichen Bauraumbedarf. Im Unterschied dazu müsste bei einer einflutigen Frischluftanlage ein externer Bypass vorgesehen werden, der erheblich mehr Bauraum benötigt und mit erhöhten Kosten verbunden ist.

Bei einer weiteren vorteilhaften Ausführungsform kann zusätzlich zu den Ventilgliedern ein Steuerglied vorgesehen sein, das die eine Flut in einer Offenstellung öffnet und in einer Schließstellung sperrt. In Verbindung mit dem der anderen Flut zugeordneten Ventilglied ist es mit Hilfe des Steuerglieds möglich, gleichzeitig beide Fluten zu sperren, auch wenn die beiden Ventilglieder zueinander phasenversetzt angeordnet sind und über einen gemeinsamen Antrieb verfügen. Durch gleichzeitiges Sperren der beiden Fluten kann zur Realisierung einer Notabschaltung der Brennkraftmaschine die Frischluftversorgung der Brennkraftmaschine unterbrochen werden, wodurch diese zwangsläufig abschaltet.

Erfindungsgemäß ist das Steuerglied passiv durch eine zwischen den Fluten stromab der beiden Ventilglieder auftretende Druckdifferenz betätigbar, derart, dass das Steuerglied die Verbindungsöffnung öffnet, wenn die Druckdifferenz zwischen den Fluten einen vorbestimmten Grenzwert erreicht, wobei das Steuerglied mittels Federkraft in die Schließstellung vorgespannt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1, 2a und 2b: jeweils eine stark vereinfachte, schaltplanartige Prinzipdarstellung einer Brennkraftmaschine mit einer Frischluftanlage bei verschiedenen erfindungsgemäßen Ausführungsformen,
- Fig. 3 bis 6: jeweils einen stark vereinfachten, prinzipiellen Längsschnitt durch die erfindungsgemäße Frischluftanlage im Bereich einer Abgasrückführung,
- Fig. 7 bis 10: Darstellungen wie in den Fig. 3 bis 6, jedoch bei einer anderen, nicht erfindungsgemäßen Ausführungsform,
- Fig. 11 und 12: Darstellungen wie in den Fig. 3 und 4, jedoch bei einer weiteren erfindungsgemäßen Ausführungsform.

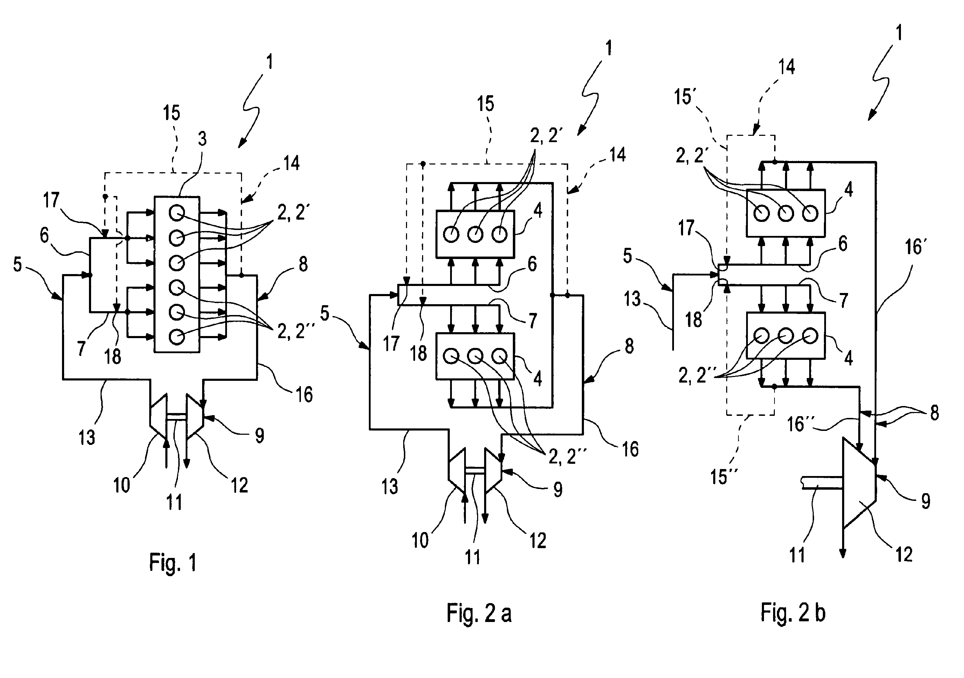

Entsprechend den Fig. 1, 2a und 2b umfasst eine Brennkraftmaschine 1, die insbesondere in einem Kraftfahrzeug angeordnet ist, mehrere Zylinder 2, die gemäß Fig. 1 in einem einzelnen Motorblock 3 oder gemäß den Fig. 2a und 2b in zwei separaten Zylinderbänken 4 angeordnet sein können. Dargestellt ist in beiden Fällen ein Sechs-Zylinder-Motor. In Fig. 1 ist Reihen-Motor dargestellt, während Fig. 2a und 2b einen V-Motor zeigen. Es ist klar, dass grundsätzlich auch andere Zylinderzahlen und/oder Motorvarianten erfindungsgemäß ausgestaltet werden können.

Die Brennkraftmaschine 1 weist eine Frischluftanlage 5 zur Versorgung der Zylinder 2 mit Frischluft auf. Die Frischluftanlage 5 ist zumindest in einem zu den Zylindern 2 führenden Abschnitt zweiflutig ausgestaltet und weist dementsprechend eine erste Flut 6 zur Luftversorgung erster Zylinder 2' sowie eine zweite Flut 7 zur Luftversorgung zweiter Zylinder 2" auf. In den gezeigten Beispielen ist demnach jeweils eine erste Zylindergruppe mit drei ersten Zylindern 2' und eine zweite Zylindergruppe mit drei zweiten Zylindern 2" realisiert. Zweckmäßig sind dabei die Zylinder 2 so gruppiert, dass sich die Ladungswechselvorgänge der einzelnen Zylinder 2 innerhalb der jeweiligen Zylindergruppe hinsichtlich ihrer Beladungsphasen möglichst wenig oder nicht überschneiden. Beim Reihen-Motor der Fig. 1 sind die beiden Zylindergruppen hintereinander angeordnet. Beim V-Motor der Fig. 2a und 2b ist je eine Zylindergruppe einer der Zylinderbänke 4 zugeordnet.

Die Brennkraftmaschine 1 weist außerdem eine Abgasanlage 8 auf, die Verbrennungsabgase von den Zylindern 2 abführt. Im Beispiel ist die Brennkraftmaschine 1 aufgeladen. Hierzu ist eine Ladeeinrichtung 9 vorgesehen, mit deren Hilfe das Druckniveau in der Frischluftanlage 5 erhöht werden kann. Bei der Ladeeinrichtung 9 kann es sich exemplarisch um einen Abgasturbolader handeln, der einen in der Frischluftanlage 5 angeordneten Verdichter 10 und eine über eine Welle 11 mit dem Verdichter 10 antriebsgekoppelte, in der Abgasanlage 8 angeordnete Turbine 12 aufweist. Der Verdichter 10 ist dabei zweckmäßig in einem einflutigen Abschnitt eines Frischlufttrakts 13 der Frischluftanlage 5 angeordnet.

Des Weiteren ist die Brennkraftmaschine 1 mit einer Abgasrückführeinrichtung 14 ausgestattet, die im Folgenden mit AGR-Einrichtung 14 bezeichnet wird. Mit Hilfe der AGR-Einrichtung 14 kann Abgas der Frischluftanlage 5 zugeführt werden. Hierzu kann eine Abgasrückführleitung 15, die im Folgenden als AGR-Leitung 15 bezeichnet wird, an einer geeigneten Stelle, zum Beispiel an einem Abgastrakt 16 der Abgasanlage 8, Abgas aufnehmen und zu Abgasrückführeinlässen 17, 18 der Frischluftanlage 5 führen, die im Folgenden als AGR-Einlässe 17, 18 bezeichnet werden. Auch die AGR-Einrichtungen 14 können mehr oder weniger zweiflutig ausgestaltet sein. Zum Beispiel weist die Ausführungsform der Fig. 2b zwei getrennte AGR-Leitungen 15' und 15" auf. Außerdem ist bei der Variante gemäß Fig. 2b auch die Abgasanlage 8 zumindest bis zur Ladeeinrichtung 9 zweiflutig ausgestaltet.

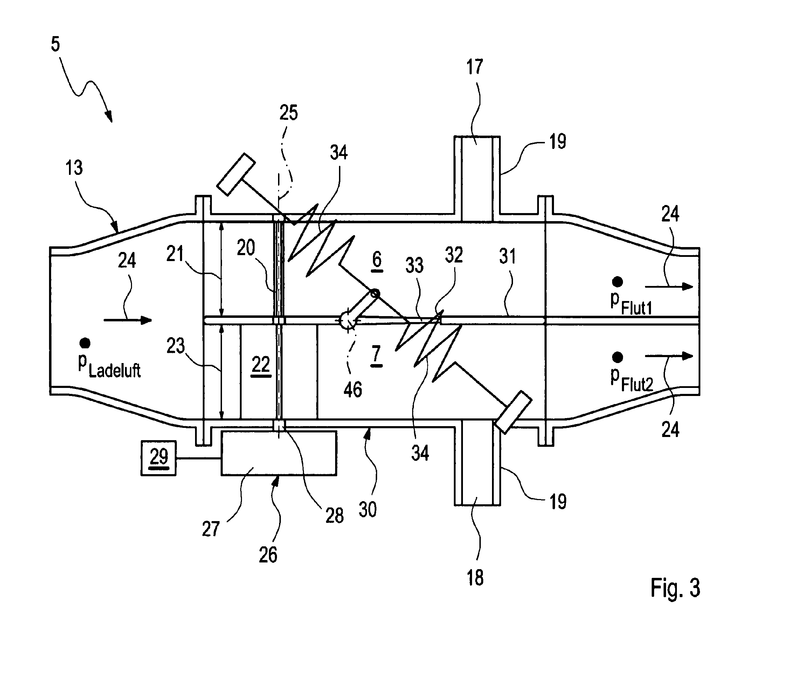

Entsprechend den Fig. 3 bis 12 weist die Frischluftanlage 5 die beiden AGR-Einlässe 17, 18 in einem zweiflutigen Abschnitt auf. Dementsprechend ist der erste AGR-Einlass 17 an die erste Flut 6 angeschlossen bzw. kommunizierend mit dieser verbunden. Ferner ist der zweite AGR-Einlass 18 an die zweite Flut 7 angeschlossen bzw. mit dieser kommunizierend verbunden. Im Beispiel sind zwei integral ausgeformte Anschlussstutzen 19 vorgesehen, die den jeweiligen AGR-Einlass 17, 18 aufweisen bzw. bilden und an welche die entsprechende AGR-Leitung 15 anschließbar ist.

Die zweiflutige Frischluftanlage 5 weist in der ersten Flut 6 stromauf des ersten AGR-Einlasses 17 ein erstes Ventilglied 20 auf, mit dessen Hilfe ein durchströmbarer Querschnitt 21 der ersten Flut 6 steuerbar ist. Analog dazu ist der zweiten Flut 7 ein zweites Ventilglied 22 zum Steuern eines durchströmbaren Querschnitts 23 der zweiten Flut 7 zugeordnet. Das zweite Ventilglied 22 befindet sich innerhalb der zweiten Flut 7 stromauf des zweiten AGR-Einlasses 18. Die Hauptströmungsrichtung der Frischluft in der Frischluftanlage 5 ist in den Figuren durch Pfeile angedeutet und mit 24 bezeichnet. Die Ventilglieder 20, 22 können den jeweils zugeordneten durchströmbaren Querschnitt 21, 23 innerhalb der jeweiligen Flut 6, 7 steuern, das heißt variieren. Insbesondere können die Ventilglieder 20, 22 den jeweiligen Querschnitt 21, 23 minimieren, vorzugsweise im Wesentlichen vollständig sperren, und maximieren, vorzugsweise im Wesentlichen vollständig öffnen. In den Fig. 3, 4 und 6 bis 12 ist das erste Ventilglied 20 in seiner Schließstellung gezeigt, während das zweite Ventilglied 22 in seiner Offenstellung dargestellt ist. Erkennbar sind die Ventilglieder 20, 22 hier als Klappen, insbesondere als Schmetterlingsklappen ausgestaltet, die um eine Rotationsachse 25 drehend verstellbar sind, die sich quer zur Hauptströmungsrichtung 24 erstreckt. Die beiden Ventilglieder 20, 22 können Bestandteil einer Ventileinrichtung 26 sein, die außerdem ein gemeinsames Antriebsglied 27 für die beiden Ventilglieder 20, 22 aufweist. Das Antriebsglied 27 treibt beispielsweise eine Antriebswelle 28 um die Rotationsachse 25 drehend an, die drehfest mit den Ventilgliedern 20, 22 verbunden ist. Zweckmäßig sind dabei die beiden Ventilglieder 20, 22 zueinander phasenversetzt an der Antriebswelle 28 angeordnet, wodurch sie entsprechend phasenversetzt mit dem Antriebsglied 27 gekoppelt sind. Der Phasenversatz ist dabei zweckmäßig so gewählt, dass das erste Ventilglied 20 den durchströmbaren Querschnitt 21 der ersten Flut 6 minimiert bzw. sperrt, während gleichzeitig das zweite Ventilglied 22 den durchströmbaren Querschnitt 23 der zweiten Flut 7 maximiert bzw. öffnet. Im Beispiel sind die beiden Ventilglieder 20, 22 daher um 90° zueinander versetzt an der Antriebswelle 28 angeordnet. Die winkelmäßige Relativlage der beiden Ventilglieder 20, 22 ist in den gezeigten Beispielen invariant. Grundsätzlich ist jedoch auch eine Ventileinrichtung 26 denkbar, bei welcher die relative Winkellage zwischen den beiden Ventilgliedern 20, 22, also deren Phasenlage, während des Betriebs der Brennkraftmaschine 1 einstellbar ist.

Im gezeigten, bevorzugten Beispiel ist die Ventileinrichtung 26 als kontinuierlich arbeitende Ventileinrichtung 26 ausgestaltet, bei der die Ventilglieder 20, 22 synchronisiert zur Drehzahl der Brennkraftmaschine 1 permanent rotieren, so dass sich die durchströmbaren Querschnitte 21, 23 der beiden Fluten 6, 7 permanent ändern. Durch hier nicht gezeigte Mulden in den seitlichen Begrenzungswänden können, abhängig von der Motorauslegung und den notwendigen Druckabsenkungen, vergleichsweise große Schließphasen realisiert werden. Die radiale Erstreckung der klappenförmigen Ventilglieder 20, 22 ist dann größer als der entsprechende Abstand der sich gegenüberliegenden Kanalwände, so dass die Klappen an ihren außenliegenden Kanten in die genannten Mulden eintauchen und für die Zeit, innerhalb der sie sich in den Mulden bewegen, den durchströmbaren Querschnitt 21, 23 minimieren bzw. sperren. Durch Ändern der Rotationsgeschwindigkeit lassen sich auch die Öffnungszeiten und Schließzeiten der Ventilglieder 20, 22, insbesondere dynamisch, verändern. Alternativ kann die Ventileinrichtung 26 auch als diskontinuierlich arbeitende Ventileinrichtung ausgestaltet sein, bei der die Ventilglieder 20, 22 zwischen zwei Endstellungen (Schließstellung und Offenstellung) umgeschaltet werden, wobei die Ventilglieder 20, 22 innerhalb der jeweiligen Endstellung kurzzeitig ruhen, um die gewünschten Schließzeiten bzw. Öffnungszeiten zu realisieren.

Das Antriebsglied 27 kann durch einen beliebigen geeigneten Antrieb gebildet sein. Beispielsweise handelt es sich um einen Elektromotor. Ebenso ist es möglich, das Antriebsglied 27 durch eine Antriebskopplung zu realisieren, welche die Ventileinrichtung 26 mit einer drehend angetriebenen Welle der Brennkraftmaschine 1 koppelt. Beispielsweise kann das Antriebsglied 27 eine Antriebskopplung mit einer Nockenwelle oder einer Kurbelwelle der Brennkraftmaschine 1 darstellen.

Die Ventilglieder 20, 22 dienen zum Einstellen einer gewünschten Abgasrückführrate, die im Folgenden als AGR-Rate bezeichnet wird. Die AGR-Rate hängt dabei vom aktuellen Betriebszustand der Brennkraftmaschine 1 ab. In einem einfachen Fall, schalten die Ventilglieder 20, 22 proportional zur Drehzahl der Brennkraftmaschine 1, was insbesondere durch eine antriebsmäßige Zwangskopplung realisierbar ist. Grundsätzlich kann jedoch auch eine Steuereinrichtung 29 vorgesehen sein, mit deren Hilfe das Antriebsglied 27 bzw. die Ventileinrichtung 26 in Abhängigkeit vorbestimmter Parameter betätigt werden kann.

Vorzugsweise weist die Frischluftanlage 5 ein Funktionsmodul 30 auf. Dieses bildet einen zweiflutigen Abschnitt des Frischlufttrakts 13 und enthält die beiden Ventilglieder 20, 22 und weist die beiden AGR-Einlässe 17, 18 auf. Das Funktionsmodul 30 ist als separate Einheit ausgestaltet und an den übrigen Frischlufttrakt 13 angebaut oder in diesen integriert. Im Beispiel ist der Frischlufttrakt 13 in der Hauptströmungsrichtung 24 bis zum Funktionsmodul 30 einflutig ausgestaltet, während er ab dem Funktionsmodul 30 zweiflutig ausgestaltet ist.

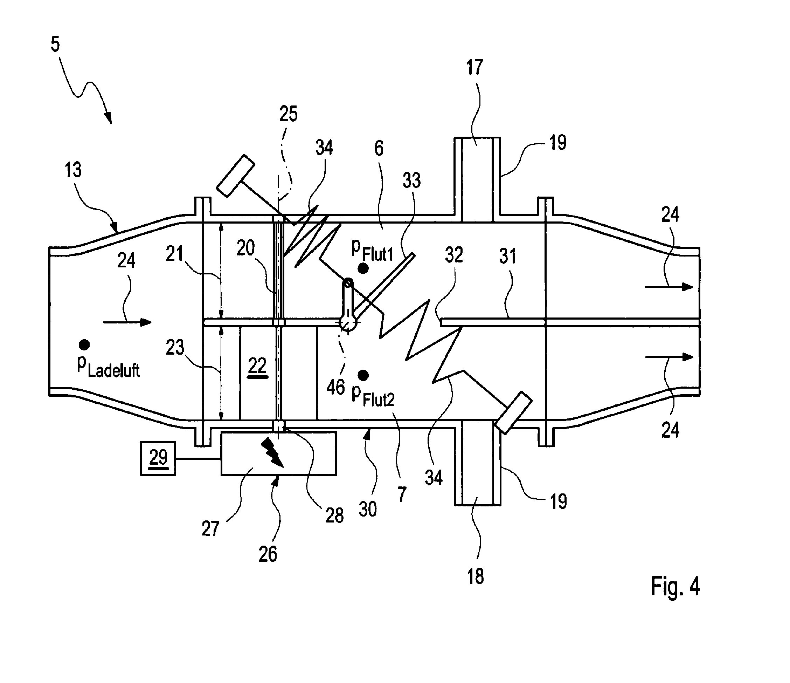

Bei den hier gezeigten Ausführungsformen der Fig. 3-12 sind die beiden Fluten 6, 7, insbesondere innerhalb des Funktionsmoduls 30, durch eine Trennwand 31 voneinander getrennt. In dieser Trennwand 31 ist zumindest eine Verbindungsöffnung 32 ausgebildet, der ein Steuerglied 33 zugeordnet ist. Mit Hilfe dieses Steuerglieds 33 kann die Verbindungsöffnung 32 geöffnet und geschlossen werden. In einer Offenstellung des Steuerglieds 33, die in den Fig. 4, 5, 7, 9 und 12 wiedergegeben ist, ist die Verbindungsöffnung 32 offen, so dass die beiden Fluten 6, 7 durch die Verbindungsöffnung 32 miteinander kommunizierend verbunden sind. In einer Schließstellung des Steuerglieds 33, die in den Fig. 3, 8 und 11 wiedergegeben ist, verschließt das Steuerglied 33 die Verbindungsöffnung 32, wodurch die beiden Fluten 6, 7 voneinander getrennt sind. Die Verbindungsöffnung 32 ist stromab der beiden Ventilglieder 20, 22 angeordnet. Zweckmäßig ist die Verbindungsöffnung 32 außerdem stromauf der beiden AGR-Einlässe 17, 18 angeordnet. Mit Hilfe der Verbindungsöffnung 32 und des Steuerglieds 33 kann ein Notlaufbetrieb für die Brennkraftmaschine 1 realisiert werden für den Fall, dass die Ventileinrichtung 26 defekt ist und in einem Zustand blockiert, in dem eine der beiden Fluten 6, 7 gesperrt oder zumindest stark gedrosselt ist.

Das Steuerglied 33 kann entsprechend der aus den Fig. 3-6 gezeigten Ausführungsform passiv betätigt werden, und zwar durch eine zwischen den Fluten 6, 7 stromab der beiden Ventilglieder 20, 22 auftretende Druckdifferenz. Das Steuerglied 33 öffnet die Verbindungsöffnung 32, wenn die Druckdifferenz zwischen den Fluten 6, 7 einen vorbestimmten Grenzwert erreicht.

Während eines normalen Betriebs der Brennkraftmaschine 1 sowie der Ventileinrichtung 26 steigen und fallen die Drücke in den beiden Fluten 6, 7 permanent und wechselseitig. Die dabei entstehenden Druckdifferenzen zwischen den beiden Fluten 6, 7 sind dabei vergleichsweise gering. Damit das Steuerglied 33 bei diesen Druckdifferenzen, die unterhalb des vorbestimmten Grenzwerts liegen, nicht permanent öffnet und schließt, kann es mittels einer geeigneten Halteeinrichtung, beispielsweise mittels einer magnetischen und/oder mechanischen Verrastung, in der Schließstellung gehalten sein. Beispielsweise kann eine mechanische Verrastung mittels einer federbelasteten Kugel realisiert sein, die in eine Vertiefung eingreift. Des Weiteren kann das Steuerglied 33 mittels Federkraft in die Schließstellung vorgespannt sein. Entsprechende Rückstellfedern 34 sind in den Fig. 3-6 angedeutet. Die Rückstellfedern 34 können dabei alternativ oder zusätzlich zu einer Halteeinrichtung vorgesehen sein, um das Steuerglied 33 in dessen Schließstellung zu halten.

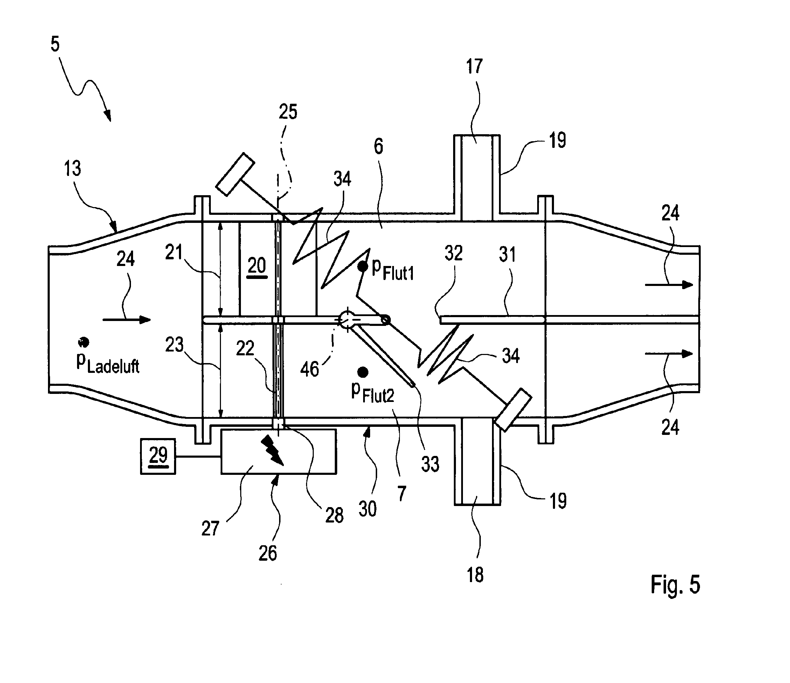

Sobald nun entsprechend den Fig. 4 und 5 die Ventileinrichtung 26 in einer Stellung blockiert, in der gemäß Fig. 4 das erste Ventilglied 20 die erste Flut 6 sperrt oder gemäß Fig. 5 das zweite Ventilglied 22 die zweite Flut 7 sperrt, entsteht durch die Ladungswechselvorgänge in der jeweiligen gesperrten Flut 6, 7 stromab des jeweiligen Ventilglieds 20, 22 ein Unterdruck, der letztlich dazu führt, dass die Druckdifferenz zwischen den beiden Fluten 6, 7 den vorbestimmten Grenzwert erreicht. In der Folge öffnet das Steuerglied 33 die Verbindungsöffnung 32, wodurch Frischluft von der jeweils nicht gesperrten Flut 6, 7 in die gesperrte Flut 6, 7 übertreten kann und die Frischluftversorgung derjenigen Zylinder 2 sicherstellen kann, die der gesperrten Flut 6, 7 zugeordnet sind. Mit dem Öffnen des Steuerglieds 33 bzw. der Verbindungsöffnung 32 kommt es auch zu einem Druckausgleich zwischen den beiden Fluten 6, 7, damit das Steuerglied 33 dann nicht aufgrund der Federbelastung wieder schließt, kann auch für die Offenstellungen des Steuerglieds 33 eine Halteeinrichtung, insbesondere eine Verrastung, vorgesehen sein.

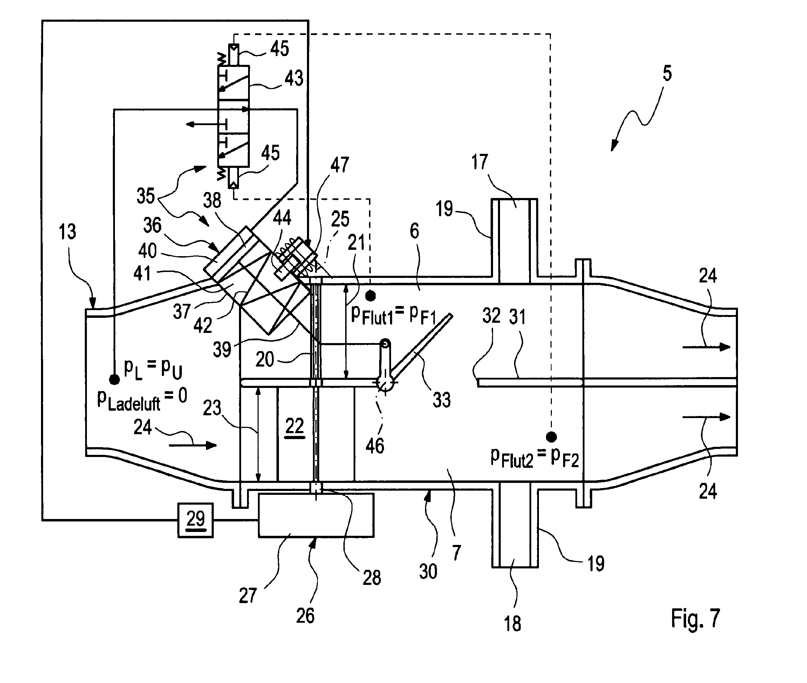

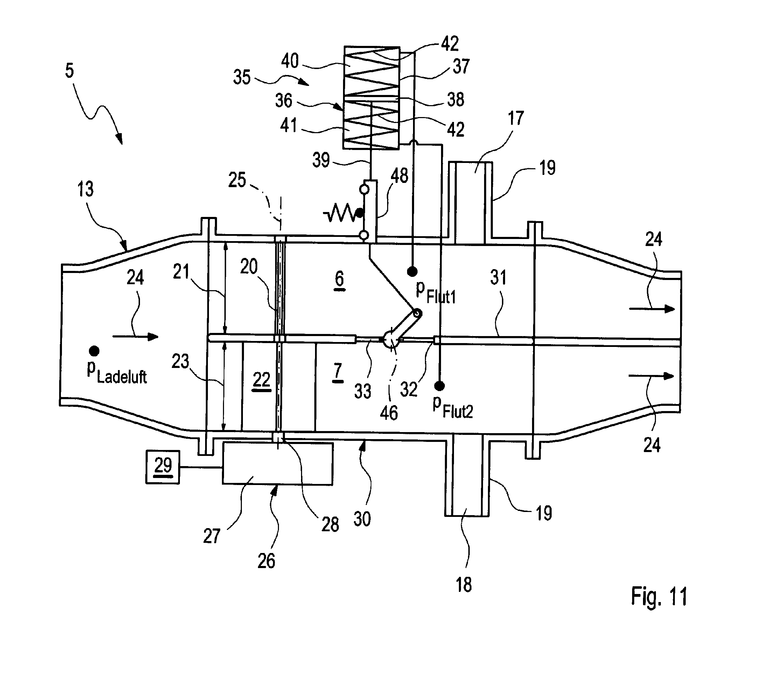

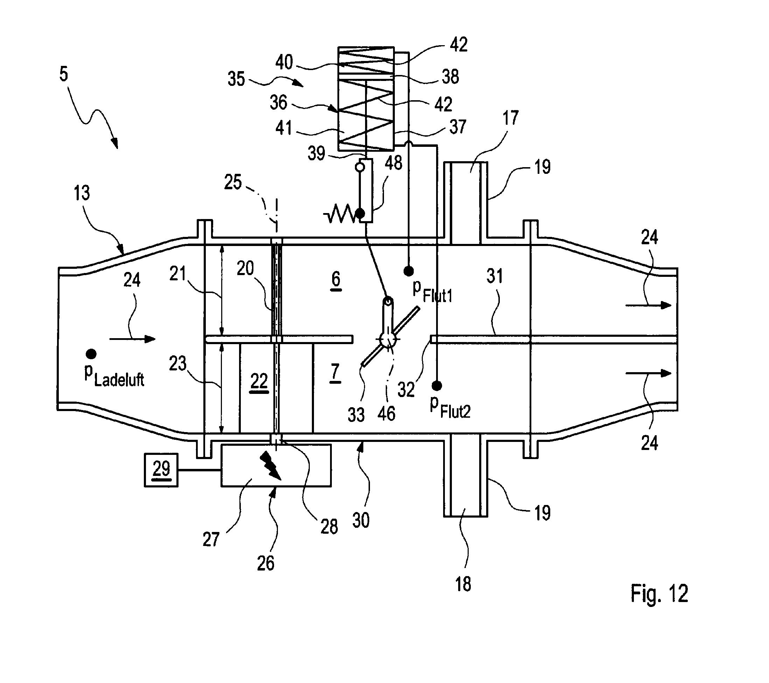

Entsprechend den Fig. 7-12 kann zum Betätigen des Steuerglieds 33 eine Betätigungseinrichtung 35 vorgesehen sein. Diese ist zweckmäßig so ausgestaltet, dass sie in Abhängigkeit der Drücke in den Fluten 6, 7 stromab der beiden Ventilglieder 20, 22 das Steuerglied 33 betätigt. Dabei kann diese Betätigungseinrichtung 35 ein pneumatisches Kolben-Zylinder-Aggregat 36 aufweisen, das einen in einem Zylinder 37 hubverstellbaren Kolben 38 aufweist, der beispielsweise über eine Kolbenstange 39 mit dem Steuerglied 33 antriebsverbunden ist. Der Kolben 38 trennt im Zylinder 37 einen Druckraum 40 von einem Gegendruckraum 41. Bei der in den Fig. 7-10 gezeigten nicht erfindungsgemäßen Ausführungsform ist im Gegendruckraum 41 eine Rückstellfeder 42 angeordnet. Ferner ist der Gegendruckraum 41 bei dieser Ausführungsform mit der atmosphärischen Umgebung gekoppelt. Dementsprechend ist das Kolben-Zylinder-Aggregat 36 der in den Fig. 7-10 gezeigten nicht erfindungsgemäßen Ausführungsform durch den Druck im Druckraum 40 gesteuert. Im Unterschied dazu zeigen die Fig. 11 und 12 eine Ausführungsform, bei welcher auch im Druckraum 40 eine Rückstellfeder 42 angeordnet ist. Der Druckraum 40 ist mit der ersten Flut 6 pneumatisch gekoppelt, während der Gegendruckraum 41 mit der zweiten Flut 7 pneumatisch gekoppelt ist. Dementsprechend ist dieses Kolben-Zylinder-Aggregat 36 durch die Druckdifferenz zwischen Druckraum 40 und Gegendruckraum 41 gesteuert.

Bei der in den Fig. 7-10 gezeigten nicht erfindungsgemäßen Ausführungsform ist die Betätigungseinrichtung 35 außerdem mit einem Steuerventil 43 ausgestattet. Dieses ist so verschaltet, dass es in Abhängigkeit des Differenzdrucks zwischen den beiden Fluten 6, 7 stromab der beiden Ventilglieder 20, 22 das Kolben-Zylinder-Aggregat 36 betätigt. Dabei wird der Druckraum 40 vom Steuerventil 43 mit dem stromauf der beiden Ventilglieder 20, 22 in der Frischgasanlage 5 herrschenden Druck beaufschlagt, solange der Differenzdruck zwischen den Fluten 6, 7 stromab der Ventilglieder 20, 22 unterhalb eines vorbestimmten Grenzwertes bleibt. Sobald dieser Differenzdruck jedoch den Grenzwert erreicht oder übersteigt, verbindet das Steuerventil 43 den Druckraum 40 mit der atmosphärischen Umgebung.

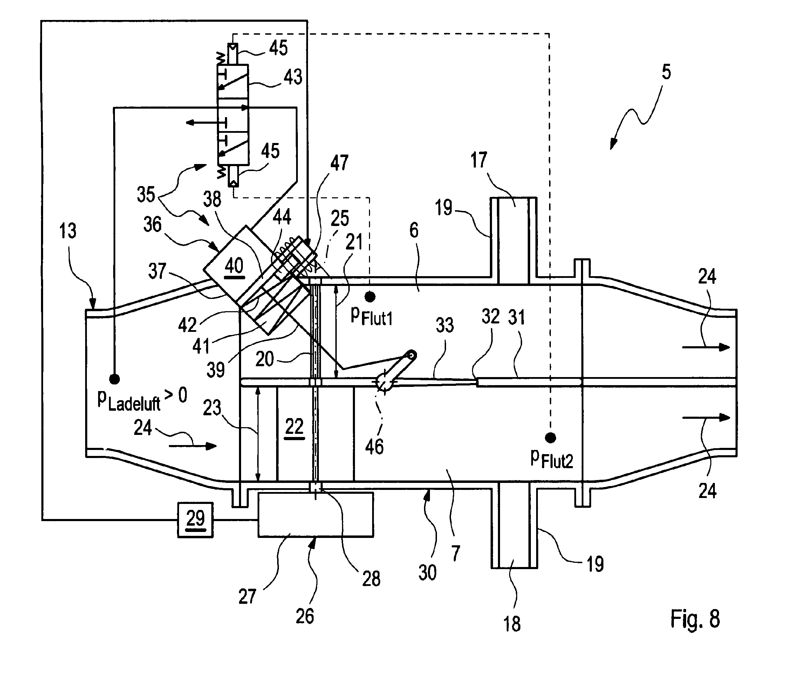

Fig. 7 repräsentiert einen Zustand bei ausgeschalteter Brennkraftmaschine 1. Der Druck p_{L} stromauf der Ventilglieder 20, 22 entspricht dann dem Umgebungsdruck p_{U}. Dementsprechend sind die Drücke im Druckraum 40 und im Gegendruckraum 41 gleich groß, so dass die Rückstellfeder 42 den Kolben 38 zur Verkleinerung des Druckraums 40 verstellen kann. In der Folge ist das Steuerglied 33 in seine Offenstellung verschwenkt. Die Verbindungsöffnung 32 ist offen. Im Betrieb
der Brennkraftmaschine 1 steigt gemäß Fig. 8 der Druck p_{L} stromauf der Ventilglieder 20, 22 über den Umgebungsdruck p_{U} an, sofern es sich wie in den Fig. 1 und 2 dargestellt, um eine aufgeladene Brennkraftmaschine 1 handelt. Folglich steigt auch der Druck im Druckraum 40, wodurch der Kolben 38 zur Verkleinerung des Gegendruckraums 41 angetrieben wird. In Fig. 8 hat der Kolben 38 eine Stellung erreicht, in der er an einem Anschlag 44 zur Anlage kommt. Durch die Verstellung des Kolbens 38 wird die Rückstellfeder 42 gespannt. Im normalen Betrieb liegt der Differenzdruck zwischen den beiden Fluten 6, 7 stromab der Ventilglieder 20, 22 unterhalb des vorbestimmten Grenzwerts, so dass der in Fig. 8 gezeigte Zustand vorliegt. Kommt es zu einer Fehlfunktion der Ventileinrichtung 26, bei der eine der Fluten 6, 7 gesperrt wird, übersteigt die Druckdifferenz zwischen den Fluten 6, 7 stromab der Ventilglieder 20, 22 den genannten Grenzwert. In der Folge wird das Steuerventil 43, dessen Steuereingänge 45 mit den Fluten 6, 7 kommunizierend verbunden sind, so verstellt, dass der Druckraum 40 mit der Umgebung verbunden wird. In der Folge entspannt sich der Druckraum 40 und die Rückstellfeder 42 kann den Kolben 38 zum Verkleinern des Druckraums 40 verstellen. In der Folge wird das Steuerglied 33 in die Offenstellung verschwenkt. Der gewünschte Druckausgleich zwischen den Fluten 6, 7 zur Realisierung des Notlaufbetriebs wird erreicht. Da mit dem Öffnen die Druckdifferenz zwischen den Fluten 6, 7 ausgeglichen wird, ist es zweckmäßig, auch für das Steuerventil 43 eine geeignete mechanische Verrastung vorzusehen, um für die Dauer des Notbetriebs den Druckraum 40 permanent mit der Umgebung zu verbinden.

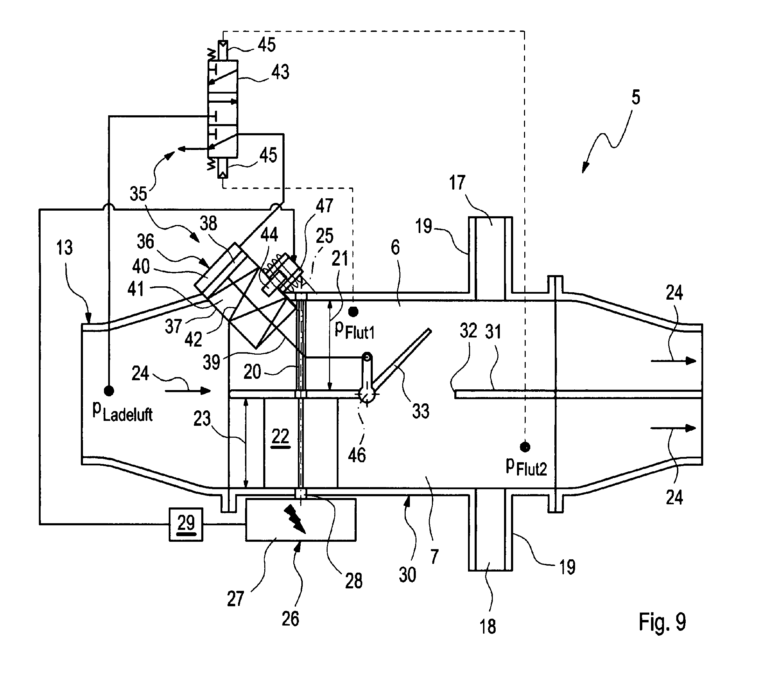

Bei der in den Fig. 7-10 gezeigten nicht erfindungsgemäßen Ausführungsform ist die Ventileinrichtung 26 zweckmäßig so ausgestaltet, dass sie bei einem Ausfall des Antriebsglieds 27, die in Fig. 9 gezeigte Stellung einnimmt, bei welcher das erste Ventilglied 20 die erste Flut 6 sperrt, während das zweite Ventilglied 22 die zweite Flut 7 öffnet oder umgekehrt.

Während bei der in den Fig. 7-10 gezeigten nicht erfindungsgemäßen Ausführungsform das Kolben-Zylinder-Aggregat 36 mit Hilfe des Steuerventils 43 aktiv geschaltet wird, erfolgt bei der in den Fig. 11 und 12 gezeigten Ausführungsform eine passive Betätigung des Kolben-Zylinder-Aggregats 36. Erreicht wird dies dadurch, dass der Druckraum 40 mit der ersten Flut 6 fluidisch gekoppelt wird, während der Gegendruckraum 41 mit der zweiten Flut 7 fluidisch gekoppelt wird. Hierdurch wirkt die Druckdifferenz zwischen den Fluten 6, 7 direkt am Kolben 38. Eine Halteeinrichtung 48 fixiert einerseits die Schließstellung des Steuerglieds 33, damit der Kolben 38 erst bei Erreichen des Grenzwerts für den Differenzdruck zwischen den Fluten 6, 7 verstellt wird. Andererseits fixiert die Halteeinrichtung 48 auch die Endpositionen, die der Kolben 38 erreicht, wenn die Druckdifferenz zwischen den Fluten 6, 7 den Grenzwert erreicht oder übersteigt. Die Fixierung dieser Endposition ist erforderlich, um ein sofortiges Schließen des Steuerglieds 33 nach dem beim Öffnen auftretenden Druckausgleich zu vermeiden. Die Rückstellfedern 42 sind dabei optional vorgesehen. Die in den Fig. 11 und 12 gezeigte Ausführungsform ermöglicht insbesondere unterschiedliche Öffnungsbewegungen für das Steuerglied 33 in Abhängigkeit davon, ob durch die Fehlfunktion der Ventileinrichtung 26 die erste Flut 6 oder die zweite Flut 7 blockiert wird. In der Ausführungsform der Fig. 11 und 12 ist das Steuerglied 33 als Klappe, insbesondere als zentral gelagerte Schmetterlingsklappe realisiert, die um eine Schwenkachse 46 verschwenkbar ist. Diese Schwenkachse 46 erstreckt sich dabei senkrecht zur Hauptströmungsrichtung 24 sowie außerdem senkrecht zur Rotationsachse 25 der Ventilglieder 20, 22. Im Unterschied dazu ist das Steuerglied 33 bei den Ausführungsformen der Fig. 2-6 als Klappe ausgebildet, die im Bereich einer Endkante um die Schwenkachse 46 gelagert ist.

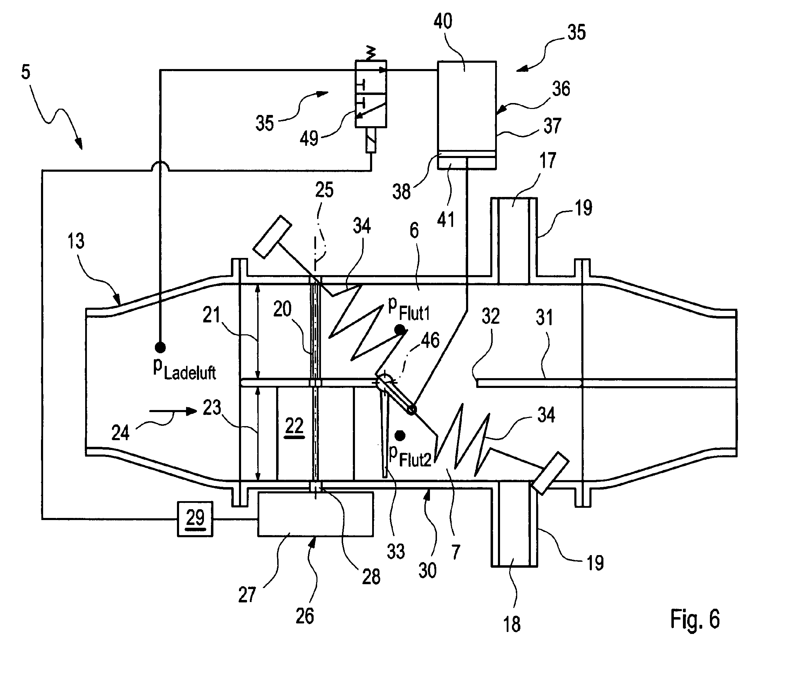

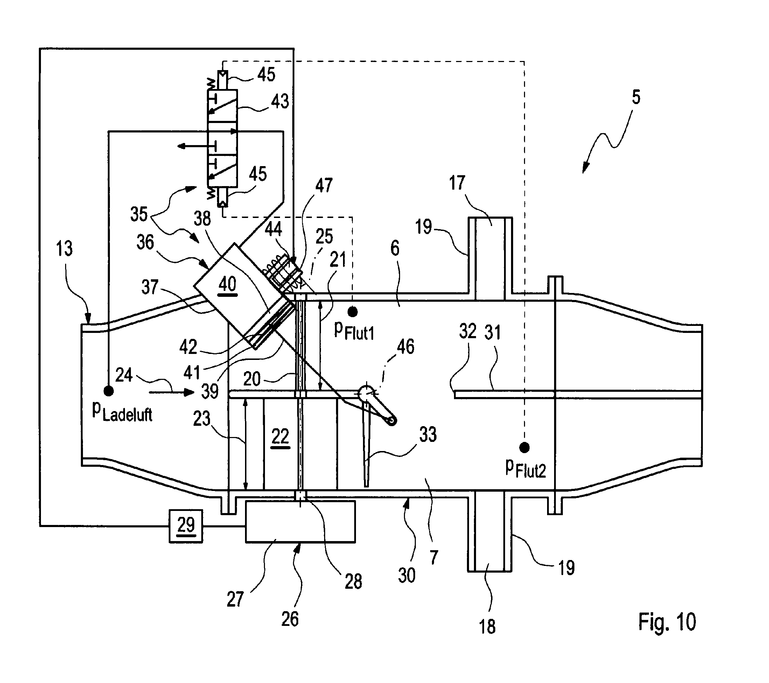

Entsprechend den Fig. 6-10 kann die Frischluftanlage 5 im Frischlufttrakt 13 und insbesondere im Funktionsmodul 30 ein zusätzlich zu den Ventilgliedern 20, 22 vorgesehenes Steuerglied 33 aufweisen. In den gezeigten Beispielen entspricht dieses Steuerglied 33 dem Steuerglied 33 zum Steuern der Verbindungsöffnung 32. Grundsätzlich kann es sich dabei jedoch um ein separates Steuerglied 33 handeln, das insbesondere auch ohne die Verbindungsöffnung 32 vorgesehen sein kann. Dieses Steuerglied 33 ist so ausgestaltet und/oder angeordnet, dass es eine der beiden Fluten 6, 7, hier die zweite Flut 7, sperren kann. Hierzu ist das Steuerglied 33 zwischen einer Offenstellung, in der es die jeweilige Flut 6, 7 freigibt, und einer Sperrstellung verstellbar, in der es die jeweilige Flut 6, 7 sperrt. Diese Sperrstellung ist in den Fig. 6 und 10 wiedergegeben. Da hier das gleiche Steuerglied 33 zum Steuern der Verbindungsöffnung 32 und zum Sperren der einen Flut 6, 7 verwendet wird, ist in der Sperrstellung des Steuerglieds 33 die Verbindungsöffnung 32 geöffnet.

Zur Realisierung eines Motorbremsbetriebs oder einer Notabschaltung der Brennkraftmaschine 1 kann nun eine Steuereinrichtung 29 vorgesehen sein, bei welcher es sich grundsätzlich um die Steuereinrichtung 29 zur Betätigung der Ventileinrichtung 26 handeln kann. Die Steuereinrichtung kann nun zum Notabschalten der Brennkraftmaschine einerseits das Steuerglied 33 zum Sperren der einen Flut, hier der zweiten Flut 7 betätigen und andererseits die Ventileinrichtung 26 zum Sperren der anderen Flut, hier der ersten Flut 6 betätigen. Dementsprechend ist in den Fig. 6 und 10 die Ventileinrichtung 26 jeweils so geschaltet, dass die erste Flut 6 mit Hilfe des ersten Ventilglieds 20 permanent gesperrt ist. Hierdurch ist die Luftversorgung der Brennkraftmaschine 1 über die beiden Fluten 6, 7 unterbrochen. Die Brennkraftmaschine 1 schaltet mangels Luft aus. Zum Betätigen des Steuerglieds 33 kann wieder ein pneumatisches Kolben-Zylinder-Aggregat 36 vorgesehen sein, bei dem es sich grundsätzlich um das Kolben-Zylinder-Aggregat 36 der Betätigungseinrichtung 35 handeln kann. Ebenso ist es möglich, ein dazu separates Kolben-Zylinder-Aggregat 36 oder eine anders ausgeführte Aktuatorik vorzusehen. Ebenfalls besitzt das jeweilige Kolben-Zylinder-Aggregat 36 wieder einen Druckraum 40, der durch einen mit dem Steuerglied 33 antriebsverbundenen Kolben 38 begrenzt ist und der mit dem in der Frischluftanlage 5 stromauf der beiden Ventilglieder 20, 22 herrschenden Druck beaufschlagbar ist. Bei der in Fig. 6 gezeigten Ausführungsform kann mit Hilfe der Steuereinrichtung 29 ein Steuerventil 49 betätigt werden, um den Steuerraum 40 mit dem Ladedruck p_{L} zu verbinden, während gleichzeitig der Gegendruckraum 41 mit der Umgebung verbunden ist. In der Folge treibt der Kolben 38 das Steuerglied 33 zum Sperren der zweiten Flut 7 an. In Fig. 6 ist somit ein separates Kolben-Zylinder-Aggregat 36 zur Realisierung der Notabschaltung vorgesehen.

Im Unterschied dazu zeigen die Fig. 7-10 eine nicht erfindungssgemäßen Ausführungsform, bei welcher das Kolben-Zylinder-Aggregat 36 der Betätigungseinrichtung 35 zur Realisierung der Notabschaltung verwendet wird. Hierzu ist dieses Kolben-Zylinder-Aggregat 36 mit dem Anschlag 44 ausgestattet, der elektromagnetisch betätigbar ist. Mit Hilfe eines elektromagnetischen Aktuators 47 kann der Anschlag 44 zwischen einer Aktivstellung und einer Passivstellung verstellt werden. Im unbestromten Zustand nimmt der Anschlag 44 die in den Fig. 7-9 wiedergegebene Aktivstellung ein, in welcher er den Hub des Kolbens 38 begrenzt. Mit Hilfe der Steuereinrichtung 29 kann der Aktuator 47 bestromt werden, wodurch der Anschlag 44 in seine Passivstellung verstellt wird, was in Fig. 10 wiedergegeben ist. Da in diesem Zustand das Steuerventil 43 den Steuerraum 40 mit dem Ladedruck p_{L} verbindet, kann der Kolben 38 nun über den Anschlag 44 hinaus zum Verkleinern des Gegendruckraums 41 bewegt werden. Das Steuerglied 33 verschwenkt hier-bei in die andere Richtung, also in die zweite Flut 7 hinein bis in die in Fig. 10 gezeigte Sperrstellung. Gleichzeitig bewirkt die Steuerung 29 durch Schließen des ersten Ventilglieds 20 eine Sperrung der ersten Flut 6. In der Folge geht die Brennkraftmaschine 1 aus. Bei ausgeschalteter Brennkraftmaschine 1 fällt auch der Ladedruck p_{L} auf den Umgebungsdruck pᵤ ab. In der Folge kann durch die Rückstellkraft der Feder 42 der Kolben 38 wieder zum Verkleinern des Druckraums 40 verstellt werden. Dabei kann der Kolben beispielsweise so ausgeführt sein, dass er (konstruktiv) die Rückstellung des Anschlags 44 verhindert, um ein Blockieren in der Notaus-Stellung zu vermeiden. Das damit antriebsgekoppelte Ventilglied 33 geht in die Ausgangsstellung zurück. Entsprechendes gilt auch für die Ausführungsform gemäß Fig. 6, wenn der Ladedruck p_{L} durch die ausgeschaltete Brennkraftmaschine 1 auf den Umgebungsdruck p_{U} abfällt.

Des Weiteren kann eine hier nicht dargestellte Sensorik vorgesehen sein, die z.B. die Voraussetzungen zum Öffnen der Verbindungsöffnung 32 überwacht. Beispielsweise kann diese Sensorik die Druckdifferenz zwischen den beiden Fluten 6, 7 überwachen. Ebenso kann die Sensorik die Stellung des Steuerglieds 33 überwachen. Sobald das Steuerglied 33 die Verbindungsöffnung 32 öffnet, wird dies von der Sensorik erkannt. Die Sensorik kann dann ein geeignetes Fehlersignal generieren, das an geeigneter Stelle abgefragt werden kann, beispielsweise um einer Fahrzeugelektronik eine entsprechende Fehlermeldung zu übermitteln und/oder um einem Fahrzeugführer das Vorliegen eines Fehlers zu signalisieren. Insbesondere soll die Sensorik zur Realisierung einer On-Board-Diagnose der Frischluftanlage 5 verwendbar sein.

## Patentansprüche

1. Zweiflutige Frischluftanlage für eine Brennkraftmaschine (1), insbesondere eines Kraftfahrzeugs,
- mit einer ersten Flut (6) zur Luftversorgung erster Zylinder (2') der Brennkraftmaschine (1),
- mit einer zweiten Flut (7) zur Luftversorgung zweiter Zylinder (2') der Brennkraftmaschine (1),
- mit einem mit der ersten Flut (6) kommunizierend verbundenen ersten Abgasrückführeinlass (17) zum Einleiten von rückgeführtem Abgas der Brennkraftmaschine (1) in die erste Flut (6),
- mit einem mit der zweiten Flut (7) kommunizierend verbundenen zweiten Abgasrückführeinlass (18) zum Einleiten von rückgeführtem Abgas der Brennkraftmaschine (1) in die zweite Flut (7),
- mit einem in der ersten Flut (6) stromauf des ersten Abgasrückführeinlasses (17) angeordneten ersten Ventilglied (20) zum Steuern eines durchströmbaren Querschnitts (21) der ersten Flut (6),
- mit einem in der zweiten Flut (7) stromauf des zweiten Abgasrückführeinlasses (18) angeordneten zweiten Ventilglied (22) zum Steuern eines durchströmbaren Querschnitts (23) der zweiten Flut (7),
- wobei in einer die beiden Fluten (6, 7) voneinander trennenden Trennwand (31) wenigstens eine mit einem Steuerglied (33) steuerbare Verbindungsöffnung (32) ausgebildet ist, die in einer Offenstellung des Steuerglieds (33) die beiden Fluten (6, 7) kommunizierend miteinander verbindet und in einer Schließstellung des Steuerglieds (33) die beiden Fluten (6, 7) voneinander trennt,
**dadurch gekennzeichnet,**
- **dass** das Steuerglied (33) passiv durch eine zwischen den Fluten (6, 7) stromab der beiden Ventilglieder (20, 22) auftretende Druckdifferenz betätigbar ist, derart, dass das Steuerglied (33) die Verbindungsöffnung (32) öffnet, wenn die Druckdifferenz zwischen den Fluten (6, 7) einen vorbestimmten Grenzwert erreicht,
- **dass** das Steuerglied (33) mittels Federkraft in die Schließstellung vorgespannt ist.

2. Frischluftanlage nach Anspruch 1,
**dadurch gekennzeichnet,**
**dass** eine Ventileinrichtung (26) vorgesehen ist, die die beiden Ventilglieder (20, 22) und ein gemeinsames Antriebsglied (27) für die beiden Ventilglieder (20, 22) umfasst, wobei die beiden Ventilglieder (20, 22) phasenversetzt mit dem Antriebsglied (27) gekoppelt sind, derart, dass das eine Ventilglied (20) den durchströmbaren Querschnitt (21) der einen Flut (6) minimiert oder sperrt, während gleichzeitig das andere Ventilglied (22) den durchströmbaren Querschnitt (23) der anderen Flut (7) maximiert oder öffnet, und umgekehrt.

3. Frischluftanlage nach Anspruch 1 oder 2,
**dadurch gekennzeichnet,**
**dass** die Ventilglieder (20, 22) zum Einstellen einer gewünschten, vom aktuellen Betriebszustand der Brennkraftmaschine (1) abhängigen Abgasrückführrate dienen und/oder betätigt sind.

4. Frischluftanlage nach einem der Ansprüche 1 bis 3,
**dadurch gekennzeichnet,**
**dass** ein Funktionsmodul (30) vorgesehen ist, das einen zweiflutigen Abschnitt eines Frischluft zur Brennkraftmaschine (1) führenden Frischlufttrakts (13) bildet, die beiden Ventilglieder (20, 22) enthält, die beiden Abgasrückführeinlässe (17, 18) aufweist und als separate Einheit in den Frischlufttrakt (13) eingebaut ist.

5. Frischluftanlage nach Anspruch 4,
**dadurch gekennzeichnet,**
**dass** der Frischlufttrakt (13) in der Strömungsrichtung (24) der Frischluft bis zum Funktionsmodul (30) einflutig und ab dem Funktionsmodul (30) zweiflutig ausgestaltet ist.

6. Frischluftanlage nach einem der Ansprüche 1 bis 5,
**dadurch gekennzeichnet,**
**dass** die Verbindungsöffnung (32) stromauf der beiden Abgasrückführeinlässe (17, 18) und/oder stromab der beiden Ventilglieder (20, 22) angeordnet ist.

7. Frischluftanlage nach einem der Ansprüche 1 bis 6,
**dadurch gekennzeichnet,**
**dass** zusätzlich zu den Ventilgliedern (20, 22) ein Steuerglied (33) vorgesehen ist, das die eine Flut (7) in einer Offenstellung öffnet und in einer Sperrstellung sperrt, wobei insbesondere vorgesehen sein kann, dass eine Steuereinrichtung (29) vorgesehen ist, die, insbesondere zur Realisierung einer Notabschaltung der Brennkraftmaschine (1) oder eines Motorbremsbetriebs, das Steuerglied (33) zum Sperren der einen Flut (7) betätigt und das der anderen Flut (6) zugeordnete Ventilglied (20) zum Sperren der anderen Flut (6) betätigt.

8. Frischluftanlage nach Anspruch 7,
**dadurch gekennzeichnet,**
**dass** ein pneumatisches Kolben-Zylinder-Aggregat (36) zum Betätigen des Steuerglieds (33) vorgesehen ist, das einen Druckraum (40) aufweist, der durch einen mit dem Steuerglied (33) antriebsverbundenen Kolben (38) begrenzt ist und der mit dem in der Frischluftanlage (5) stromauf der beiden Ventilglieder (20, 22) herrschenden Druck beaufschlagbar ist.

9. Frischluftanlage nach Anspruch 7,
**dadurch gekennzeichnet,**
**dass** ein Aktuator (36) zum Betätigen des Steuerglieds (33) vorgesehen ist.

10. Frischluftanlage nach einem der Ansprüche 7 bis 9,
**dadurch gekennzeichnet,**
**dass** das Steuerglied (33) stromab der Ventilglieder (20, 22) und/oder stromauf der Abgasrückführeinlässe (17, 18) angeordnet ist.

11. Frischluftanlage nach einem der Ansprüche 1 bis 6 und nach einem der Ansprüche 7 bis 10,
**dadurch gekennzeichnet,**
**dass** ein gemeinsames Steuerglied (33) vorgesehen ist, das in einer Stellung die Verbindungsöffnung (32) sperrt und die eine Flut (7) öffnet und das in einer anderen Stellung die Verbindungsöffnung (32) öffnet und die eine Flut (7) sperrt, wobei insbesondere vorgesehen sein kann, dass das Steuerglied (33) in Abhängigkeit einer Druckdifferenz zwischen den beiden Fluten (6, 7) zum Öffnen und Sperren der Verbindungsöffnung (32) und/oder zum Öffnen und Sperren der einen Flut (7) betätigt ist.

12. Frischluftanlage nach einem der Ansprüche 1 bis 11,
**dadurch gekennzeichnet,**
**dass** eine Sensorik vorgesehen ist, die ein Fehlersignal generiert, wenn das Steuerglied (33) zum Öffnen der Verbindungsöffnung (32) betätigt wird oder wenn die Voraussetzungen zum Öffnen der Verbindungsöffnung (32) vorliegen.

## Claims

1. Dual path fresh air system for an internal combustion engine (1), in particular of a motor vehicle,
- with a first path (6) for the air supply of first cylinders (2') of the internal combustion engine (1),
- with a second path (7) for the air supply of second cylinders (2') of the internal combustion engine (1),
- with a first exhaust gas recirculation inlet (17) which is connected in a communicating manner to the first path (6) to introduce recirculated exhaust gas of the internal combustion engine (1) into the first path (6),
- with a second exhaust gas recirculation inlet (18) which is connected in a communicating manner to the second path (7) to introduce recirculated exhaust gas of the internal combustion engine (1) into the second path (7),
- with a first valve member (20) which is arranged upstream of the first exhaust gas recirculation inlet (17) in the first path (6), for controlling a cross section (21) through which fluid can flow of the first path (6),
- with a second valve member (22) which is arranged upstream of the second exhaust gas recirculation inlet (18) in the second path (7), for controlling a cross section (23) through which fluid can flow of the second path (7),
wherein at least one connection opening (32) is formed in a partition (31) which separates the two paths (6, 7) from each other, which connection opening can be controlled with a control member (33), connects the two paths (6, 7) to each other in a communicating manner when the control member (33) is in an open position and separates the two paths (6, 7) from each other when the control member (33) is in a closed position,
**characterised in that**
- the control member (33) can be actuated passively by a pressure difference occurring between the paths (6, 7) downstream of the two valve members (20, 22) in such a manner that the control member (33) opens the connection opening (32) when the pressure difference between the paths (6, 7) reaches a predefined limit value,
- the control member (33) is prestressed into the closed position by spring force.

2. Fresh air system according to Claim 1,
**characterised in that**
a valve device (26) is provided, which comprises the two valve members (20, 22) and a common drive member (27) for the two valve members (20, 22), wherein the two valve members (20, 22) are coupled in a phase-offset manner to the drive member (27) in such a manner that one valve member (20) minimises or blocks the cross section (21) through which fluid can flow of one path (6) whereas at the same time the other valve member (22) maximises or opens the cross section (23) through which fluid can flow of the other path (7), and vice versa.

3. Fresh air system according to Claim 1 or 2,
**characterised in that**
the valve members (20, 22) are used and/or actuated to set a desired exhaust gas recirculation rate which depends on the current operating state of the internal combustion engine (1).

4. Fresh air system according to one of Claims 1 to 3,
**characterised in that**
a functional module (30) is provided, which forms a dual path section of a fresh air tract (13) which conducts fresh air to the internal combustion engine (1), which contains the two valve members (20, 22) and the two exhaust gas recirculation inlets (17, 18) and is installed in the fresh air tract (13) as a separate unit.

5. Fresh air system according to Claim 4,
**characterised in that**
the fresh air tract (13) has a single path configuration as far as the functional module (30) and a dual path configuration from the functional module (30), in the flow direction (24) of the fresh air.

6. Fresh air system according one of Claims 1 to 5,
**characterised in that**
the connection opening (32) is arranged upstream of the two exhaust gas recirculation inlets (17, 18) and/or downstream of the two valve members (20, 22).

7. Fresh air system according to one of Claims 1 to 6,
**characterised in that**
in addition to the valve members (20, 22), a control member (33) is provided which in an open position opens a path (7) and in a blocking position blocks the same, wherein in particular it can be provided that a control device (29) is provided which, in particular to realise an emergency shutdown of the internal combustion engine (1) or an engine braking mode, actuates the control member (33) to block one path (7) and actuates the valve member (20) allocated to the other path (6) to block the other path (6).

8. Fresh air system according to Claim 7,
**characterised in that**
a pneumatic piston cylinder unit (36) is provided for actuating the control member (33), which unit has a pressure space (40) which is delimited by a piston (38) drive-connected to the control member (33) and which can be loaded with the pressure prevailing in the fresh air system (5) upstream of the two valve members (20, 22).

9. Fresh air system according to Claim 7,
**characterised in that**
an actuator (36) is provided for actuating the control member (33).

10. Fresh air system according to one of Claims 7 to 9,
**characterised in that**
the control member (33) is arranged downstream of the valve members (20, 22) and/or upstream of the exhaust gas recirculation inlets (17, 18).

11. Fresh air system according to one of Claims 1 to 6 and according to one of Claims 7 to 10,
**characterised in that**
a common control member (33) is provided which in one position blocks the connection opening (32) and opens a path (7) and in the other position opens the connection opening (32) and blocks a path (7), wherein particular it can be provided that the control member (33) is actuated depending on a pressure difference between the two paths (6, 7) to open and block the connection opening (32) and/or to open and block one path (7).

12. Fresh air system according to one of Claims 1 to 11,
**characterised in that**
a sensor system is provided which generates an error signal when the control member (33) is actuated to open the connection opening (32) or when the conditions for opening the connection opening (32) are present.

## Revendications

1. Installation d'air frais à double flux pour un moteur à combustion interne (1), en particulier d'un véhicule automobile, comprenant
- un premier flux (6) pour l'alimentation en air de premiers cylindres (2') dudit moteur à combustion interne (1),
- un deuxième flux (7) pour l'alimentation en air de deuxièmes cylindres (2') dudit moteur à combustion interne (1),
- une première entrée de recyclage de gaz d'échappement (17) reliée de manière communicante audit premier flux (6) et destiné à l'introduction de gaz d'échappement recyclé du moteur à combustion interne (1) dans le premier flux (6),
- une deuxième entrée de recyclage de gaz d'échappement (18) reliée de manière communicante audit deuxième flux (7) et destiné à l'introduction de gaz d'échappement recyclé du moteur à combustion interne (1) dans le deuxième flux (7),
- un premier élément de valve (20) disposé dans ledit premier flux (6) en amont de ladite première entrée de recyclage de gaz d'échappement (17) et destiné à commander une section transversale (21) du premier flux (6) qui peut être traversée,
- un deuxième élément de valve (22) disposé dans ledit deuxième flux (7) en amont de ladite deuxième entrée de recyclage de gaz d'échappement (18) et destiné à commander une section transversale (23) du deuxième flux (7) qui peut être traversée,
- dans une cloison (31) qui sépare les deux flux (6, 7) l'un de l'autre étant ménagée au moins une ouverture de communication (32) apte à être commandée par un élément de commande (33) et qui, dans une position ouverte dudit élément de commande (33), relie les deux flux (6, 7) d'une manière communicante entre eux et qui, dans une position fermée dudit élément de commande (33), sépare les deux flux (6, 7) l'un de l'autre,
**caractérisée par le fait**
- **que** ledit élément de commande (33) peut être actionné de manière passive par une différence de pression se produisant entre les flux (6, 7) en aval des deux éléments de valve (20, 22), de telle sorte que ledit élément de commande (33) ouvre ladite ouverture de communication (32) lorsque la différence de pression entre les flux (6, 7) atteint une valeur limite prédéterminée,
- **que** ledit élément de commande (33) est précontraint dans la position fermée au moyen d'une force de ressort.

2. Installation d'air frais selon la revendication 1, **caractérisée par le fait que** l'on prévoit un dispositif de valve (26) qui comprend les deux éléments de valve (20, 22) et un élément commun d'entraînement (27) pour les deux éléments de valve (20, 22), les deux éléments de valve (20, 22) étant couplés à décalage de phase avec ledit élément d'entraînement (27) de telle manière que l'un (20) des éléments de valve minimise ou bloque la section transversale (21) de l'un (6) des flux, qui peut être traversée, tandis que, en même temps, l'autre élément de valve (22) maximise ou ouvre la section transversale (23) de l'autre flux (7), qui peut être traversée, et inversement.

3. Installation d'air frais selon la revendication 1 ou 2, **caractérisée par le fait que** lesdits éléments de valve (20, 22) servent à et/ou sont actionnés pour régler un taux souhaité de recyclage de gaz d'échappement qui est fonction de l'état actuel de fonctionnement du moteur à combustion interne (1).

4. Installation d'air frais selon l'une quelconque des revendications 1 à 3, **caractérisée par le fait que** l'on prévoit un module fonctionnel (30) qui forme une section à double flux d'un tronçon d'air frais (13) amenant de l'air frais au moteur à combustion interne (1), comprend les deux éléments de valve (20, 22), présente les deux entrées de recyclage de gaz d'échappement (17, 18) et est monté comme unité séparée dans ledit tronçon d'air frais (13).

5. Installation d'air frais selon la revendication 4, **caractérisée par le fait que** ledit tronçon d'air frais (13) est réalisé, dans le sens d'écoulement (24) de l'air frais, à flux simple jusqu'au module fonctionnel (30) et à double flux à partir du module fonctionnel (30).

6. Installation d'air frais selon l'une quelconque des revendications 1 à 5, **caractérisée par le fait que** ladite ouverture de communication (32) est disposée en amont des deux entrées de recyclage de gaz d'échappement (17, 18) et/ou en aval des deux éléments de valve (20, 22).

7. Installation d'air frais selon l'une quelconque des revendications 1 à 6, **caractérisée par le fait que** l'on prévoit, en plus des éléments de valve (20, 22), un élément de commande (33) qui ouvre l'un (7) des flux dans une position ouverte et bloque celui-ci dans une position de blocage, dans laquelle il peut être prévu en particulier qu'un dispositif de commande (29) est prévu qui, en particulier pour la réalisation d'un arrêt d'urgence du moteur à combustion interne (1) ou d'un fonctionnement de freinage par le moteur, actionne ledit élément de commande (33) pour bloquer l'un (7) des flux et actionne ledit élément de valve (20) associé à l'autre flux (6) pour bloquer ledit autre flux (6).

8. Installation d'air frais selon la revendication 7, **caractérisée par le fait que** l'on prévoit un groupe pneumatique piston-cylindre (36) pour actionner ledit élément de commande (33), qui présente une chambre de pression (40) qui est délimitée par un piston (38) relié à entraînement audit élément de commande (33) et qui peut être soumise à la pression qui règne dans l'installation d'air frais (5) en amont des deux éléments de valve (20, 22).

9. Installation d'air frais selon la revendication 7, **caractérisée par le fait que** l'on prévoit un actionneur (36) pour actionner ledit élément de commande (33).

10. Installation d'air frais selon l'une quelconque des revendications 7 à 9, **caractérisée par le fait que** ledit élément de commande (33) est disposé en aval des éléments de valve (20, 22) et/ou en amont des entrées de recyclage de gaz d'échappement (17, 18).

11. Installation d'air frais selon l'une quelconque des revendications 1 à 6 et selon l'une quelconque des revendications 7 à 10, **caractérisée par le fait que** l'on prévoit un élément de commande (33) commun qui, dans une position, bloque ladite ouverture de communication (32) et ouvre l'un (7) des flux et qui, dans une autre position, ouvre ladite ouverture de communication (32) et bloque l'un (7) des flux, dans laquelle il peut être prévu en particulier que ledit élément de commande (33) est actionné en fonction d'une différence de pression entre les deux flux (6, 7) pour l'ouverture et le blocage de ladite ouverture de communication (32) et/ou pour l'ouverture et le blocage de l'un (7) des flux.

12. Installation d'air frais selon l'une quelconque des revendications 1 à 11, **caractérisée par le fait que** l'on prévoit un système sensoriel qui génère un signal d'erreur lorsque ledit élément de commande (33) est actionné pour ouvrir ladite ouverture de communication (32) ou en présence des conditions préalables pour l'ouverture de ladite ouverture de communication (32).
